# FASCICULE DE BREVET EUROPEEN

(11) **EP 4 167 070 B1**
(45) Date de publication et mention de la délivrance du brevet: **31.12.2025**
(21) Numéro de dépôt: 22200902.9
(22) Date de dépôt: 11.10.2022
(51) Int. Cl.: G06F 3/06, G06F 11/14, G06F 21/62, G06F 11/10

(54) **PROCÉDÉ HYBRIDE DE STOCKAGE D'INFORMATION NUMÉRIQUE ET ARCHITECTURE HYBRIDE DE STOCKAGE D'INFORMATION NUMÉRIQUE**
HYBRIDES VERFAHREN ZUR SPEICHERUNG DIGITALER INFORMATIONEN UND HYBRIDE ARCHITEKTUR ZUR SPEICHERUNG DIGITALER INFORMATIONEN
HYBRID DIGITAL INFORMATION STORAGE METHOD AND HYBRID DIGITAL INFORMATION STORAGE ARCHITECTURE

(30) Priorité: 12.10.2021 FR 2110810; 12.10.2021 FR 2110814
(43) Date de publication de la demande: 19.04.2023
(73) Titulaire: Memento Cloud, 30000 Nimes (FR)
(72) Inventeur: RICHARD, Nathan, 30310 VERGEZE (FR)
(74) Mandataire: Cornuejols, Georges

(56) Documents cités:
- EP-A1- 2 743 821
- EP-A1- 2 755 161
- WO-A1-2016/005355
- US-A1- 2013 275 695
- US-A1- 2019 171 365

## Description

### Domaine technique de l'invention

La présente invention vise un procédé hybride de stockage d'information numérique et une architecture hybride de stockage d'information numérique. Elle s'applique, notamment, au domaine du stockage de données informatiques.

### État de la technique

Dans le domaine du stockage de données informatiques, on connait essentiellement les dispositifs locaux de stockage, de type mémoires locales de terminaux informatiques, tels par exemple des ordinateurs, et les dispositifs distants de stockages sur le nuage (« cloud », en anglais).

Ces alternatives peuvent être utilisées en combinaison, bien que cet usage hybride soit réalisé fichier par fichier et manuellement par un utilisateur déplaçant un fichier depuis ou vers un stockage sur le nuage ou depuis ou vers un répertoire local synchronisé avec un répertoire distant.

Par ailleurs, l'amélioration des techniques durant les 20 dernières années a permis d'augmenter les capacités de stockages des dispositifs informatiques de près de deux ordres de grandeur à prix constant (de -100Go à -10To). Durant la même période, les besoins professionnels de stockage de données n'ont pas tous évolué dans la même mesure : si de nouvelles pratiques comme la production multimédia ou les mégadonnées (« big data », en anglais) sont fortement consommatrices de stockage, l'augmentation des besoins en bureautique a été marginale durant la même période. Il en résulte que dans de nombreuses entreprises, la majorité du stockage présent dans l'équipement informatique ne sera jamais utilisé durant la vie du matériel, ce qui constitue un gâchis économique et écologique.

On connait la demande de brevet américain US 2013/275 695 qui divulgue une exploitation d'espaces de stockage distants et la demande de brevet américain US 2019/171 365 qui divulgue l'utilisation d'un cache avant un stockage à distance.

### Présentation de l'invention

La présente invention vise à remédier à tout ou partie de ces inconvénients.

À cet effet, selon un premier aspect, la présente invention vise un procédé hybride de stockage d'information numérique, qui comporte :
- une étape de configuration, qui comporte :
   - une étape de définition d'au moins deux dispositifs de stockage d'informations, au moins l'un des dispositifs étant local et non dédié au stockage,
   - une étape de création d'une abstraction informatique présentant des caractéristiques d'adressage communes entre au moins deux dispositifs de stockage, chaque abstraction étant adressable par un dispositif de contrôle central,
   - de manière itérative, une étape dynamique d'ajustement de capacité de stockage locale, comportant :
      - une étape d'attribution, par au moins un dispositif local et non dédié au stockage, d'une capacité de stockage et
      - une étape de communication, au dispositif de contrôle central, d'une capacité de stockage attribuée et
      - une étape d'exécution, qui comporte :
         - une étape de déclenchement de sauvegarde d'une information numérique,
         - une étape de fragmentation de l'information numérique en au moins un segment d'information,
         - une étape de sélection, par le dispositif de contrôle central et pour chaque segment, d'un dispositif de stockage en fonction des abstractions créées et
         - une étape d'enregistrement, sur le dispositif de stockage sélectionné, du segment d'information associé.

Grâce à ces dispositions, le stockage d'un même fichier (ou de toute autre structure informatique de données) peut être réalisé partiellement sur un nombre quelconque de ressources, locales ou distantes. Par ailleurs, la mise en œuvre de ressources locales non dédiées, de type ordinateur mis en œuvre régulièrement par un utilisateur exécutant des applications tierces, permet une optimisation de la consommation globale de mémoire. La disponibilité de telles ressources peut être mise à jour en temps réel, à mesure que la capacité de stockage d'un terminal local augmente ou diminue.

Il résulte globalement de ces dispositions une capacité fine de gestion des ressources mémoires dans un réseau informatique.

Dans des modes de réalisation optionnels, l'étape d'exécution comporte une étape de chiffrement à la source d'un segment d'information en fonction d'une clé privée tierce.

Ces modes de réalisation permettent de garantir la confidentialité des données stockées, ces données pouvant être stockées sur des terminaux locaux appartenant à d'autres propriétaires que le propriétaire des données.

Dans des modes de réalisation optionnels, l'étape de configuration et/ou l'étape dynamique d'ajustement comporte :
- une étape d'attribution, par au moins un dispositif tiers de stockage situé dans un réseau informatique tiers par rapport à au moins un dispositif local, d'une capacité de stockage,
- une étape de communication, par au moins un dispositif tiers au dispositif de contrôle central, d'une capacité de stockage attribuée et
- une étape de création, par un système de calcul, d'une abstraction informatique présentant des caractéristiques d'adressage communes entre au moins un dispositif local et au moins un dispositif tiers, chaque abstraction étant adressable par un dispositif de contrôle central.

Ces modes de réalisation permettent de connecter des ressources de mémoire supplémentaires situées en dehors du réseau principal d'un utilisateur.

Dans des modes de réalisation optionnels, l'étape de fragmentation comporte :
- une étape de décomposition du segment d'information en au moins un bloc d'information et
- une étape de génération de redondances, pour au moins un bloc d'information,
les blocs d'informations étant enregistrés au cours de l'étape d'enregistrement.

Ces modes de réalisation permettent d'augmenter la fiabilité générale du système afin de pallier les risques de défaillance de blocs d'informations ou de dispositifs de stockages hébergeant ces blocs.

Dans des modes de réalisation optionnels, au moins deux segment et/ou blocs représentatifs d'une information numérique initiale sont enregistrés sur au moins deux dispositifs de stockages distincts.

Ces modes de réalisation permettent de distribuer le stockage d'un segment entre deux dispositifs distincts, chaque dispositif de stockage étant incapable de restaurer l'intégralité d'une information numérique ainsi divisée en segment et/ou en blocs.

Dans des modes de réalisation optionnels, l'étape d'exécution comporte une étape de détermination d'une empreinte unique d'un segment d'information et une étape de stockage de l'empreinte numérique déterminée, cette empreinte étant configurée pour être utilisée lors d'une lecture du segment d'information enregistré pour en assurer l'intégrité et pour protéger le dispositif de stockage de l'introduction de code malveillant.

Ces modes de réalisation permettent de pallier les risques de compromission de blocs d'informations ou de dispositifs de stockages hébergeant ces blocs.

Dans des modes de réalisation optionnels, une étape d'attribution est configurée pour associer au moins une caractéristique de disponibilité à une capacité de stockage, l'étape de sélection étant réalisée en fonction d'au moins une capacité de stockage communiquée au dispositif central de contrôle.

Ces modes de réalisation permettent une gestion fine des ressources mémoires dans un réseau informatique, en fonction des capacités disponibles mais également des critères de disponibilité de ces capacités.

Dans des modes de réalisation optionnels, une étape d'attribution est configurée pour associer au moins un identifiant d'utilisateur à une capacité de stockage, l'étape de sélection étant réalisée en fonction d'au moins un identifiant d'utilisateur communiqué au dispositif central de contrôle.

Ces modes de réalisation permettent une gestion fine des ressources mémoires dans un réseau informatique, en fonction des capacités disponibles mais également des identifiants d'utilisateurs associés à ces capacités. Ceci, notamment, permet d'éviter que l'ensemble des segments et/ou blocs soient sauvegardés dans des dispositifs de stockages appartenant à un utilisateur unique.

Dans des modes de réalisation optionnels, l'étape de configuration comporte une étape de définition d'une stratégie de sélection, l'étape de sélection mettant en œuvre une stratégie de sélection définie.

Ces modes de réalisations permettent une gestion fine des ressources mémoires dans un réseau informatique.

Dans des modes de réalisation optionnels, le procédé objet de la présente invention comporte, en amont de l'étape d'enregistrement sur au moins un stockage sélectionné, une étape de chiffrement local du segment ou du bloc à enregistrer en fonction d'une clé de chiffrement aléatoire, cette clé de chiffrement aléatoire étant configurée pour être utilisée lors d'une lecture du segment d'information enregistré pour en assurer l'intégrité et pour protéger le dispositif de stockage de l'introduction de code malveillant.

Ces modes de réalisations permettent de réduire considérablement le risque d'infection d'un réseau ou terminal informatique par un virus, le segment ou bloc étant, lors de son déchiffrement, réagencé de sorte qu'un programme informatique malveillant est rendu inopérant.

Dans des modes de réalisation optionnels, le dispositif central de contrôle est adressable directement par au moins un stockage local et au moins un stockage tiers, permettant la constitution d'un réseau en étoile entre un réseau local et un réseau distant non local.

Ces modes de réalisation permettent de contourner les limitations liées aux interactions dans un réseau local d'une part et aux interactions dans un réseau internet d'autre part. En effet, ces interactions ne permettant pas la connexion directe d'une ressource dans un réseau internet à une ressource dans un réseau local.

Dans des modes de réalisation, un dispositif de stockage d'un dispositif réalisant l'étape de déclenchement est exclu d'une liste de dispositif de stockage candidats à l'étape de sélection.

Ces modes de réalisation améliorent la redondance de sauvegarde et optimisent la gestion de la mémoire globale de l'architecture.

Dans des modes de réalisations particuliers, l'étape de sélection est réalisée en fonction :
- d'une valeur représentative d'une charge de travail en cours ou à venir d'un dispositif de stockage,
- d'une valeur représentative du temps de traitement moyen d'une demande par le dispositif de stockage,
- d'une valeur représentative de la fiabilité ou la disponibilité du dispositif de stockage et/ou
- d'une valeur représentative d'émissions carbone liées à la production d'électricité mise en œuvre pour alimenter un dispositif de stockage.

Ces modes de réalisations permettent d'optimiser l'attribution du dispositif de stockage responsable de la sauvegarde de manière dynamique et intelligente.

Dans des modes de réalisations particuliers, l'étape d'exécution est réalisée en fonction de règles d'exécution, au moins une règle d'exécution étant associée à :
- une valeur représentative d'un nombre de dispositifs de stockage définis,
- une valeur représentative d'une utilisation des dispositifs de stockage définis,
- une valeur représentative d'un horaire d'exécution et/ou
- une valeur représentative d'une émission carbone liée à la production d'électricité mise en œuvre pour alimenter un dispositif de stockage.

Ces modes de réalisations permettent d'optimiser le déclenchement de la sauvegarde de manière dynamique et intelligente.

Selon un deuxième aspect, la présente invention vise une architecture hybride de stockage d'information numérique, qui comporte :
- au moins deux dispositifs de stockage d'informations, au moins l'un des dispositifs étant local et non dédié au stockage, au moins un dispositif local comportant :
   - un moyen d'attribution d'une capacité de stockage et
   - un moyen de communication, à un dispositif de contrôle central, d'une capacité de stockage attribuée,
   - un moyen de configuration, configuré pour créer une abstraction informatique présentant des caractéristiques d'adressage communes entre au moins deux dispositifs de stockage, chaque abstraction étant adressable par le dispositif de contrôle central,
   - un moyen de déclenchement de sauvegarde d'une information numérique,
   - un moyen de fragmentation de l'information numérique en au moins un segment d'information,
   - le dispositif de contrôle central associé à chaque dispositif de stockage comportant un moyen de sélection, par le dispositif de contrôle central et pour chaque segment, d'un dispositif de stockage en fonction des abstractions créées et
   - un moyen d'enregistrement, sur le dispositif de stockage sélectionné, du segment d'information associé.

Les avantages de cette architecture sont identiques aux avantages du procédé objet de la présente invention.

### Brève description des figures

D'autres avantages, buts et caractéristiques particulières de l'invention ressortiront de la description non limitative qui suit d'au moins un mode de réalisation particulier du procédé et de l'architecture objets de la présente invention, en regard des dessins annexés, dans lesquels :
- La figure 1 représente, schématiquement, et sous forme d'un logigramme, une succession d'étapes particulière du procédé objet de la présente invention et
- La figure 2 représente, schématiquement, un mode de réalisation particulier de l'architecture objet de la présente invention.

### Description des modes de réalisation

La présente description est donnée à titre non limitatif, chaque caractéristique d'un mode de réalisation pouvant être combinée à toute autre caractéristique de tout autre mode de réalisation de manière avantageuse.

On note dès à présent que les figures ne sont pas à l'échelle.

Dans la présente description, on appelle « moyen d'entrée » tout dispositif permettant la transmission d'informations vers un système informatique. Un tel moyen d'entrée est, par exemple, un clavier, une souris et/ou un écran tactile adapté pour interagir avec un système informatique de manière à recueillir une saisie de l'utilisateur. Dans des variantes, le moyen d'entrée est de nature logique, tel un port réseau d'un système informatique configuré pour recevoir une commande de saisie transmise électroniquement. Un tel moyen d'entrée peut être associé à une interface graphique utilisateur (GUI) présentée à un utilisateur ou à une interface de programmation d'application (API). Dans d'autres variantes, le moyen d'entrée peut être un capteur configuré pour mesurer un paramètre physique spécifié pertinent pour le cas d'utilisation prévu.

On appelle « dispositif de calcul » tout dispositif de calcul électronique, unitaire ou distribué, capable de recevoir des entrées numériques et de fournir des sorties numériques par et vers toute sorte d'interfaces numériques. Typiquement, un dispositif de calcul désigne soit un ordinateur exécutant un logiciel ayant accès à un stockage de données, soit une architecture client-serveur dans laquelle les données et/ou au moins une partie des calculs sont effectués côté serveur tandis que le côté client sert d'interface. Dans des variantes, un dispositif de calcul peut être un téléphone ou une tablette numérique.

On appelle « information numérique » tout ensemble d'informations numériques susceptibles d'être interprétées ou lues par un dispositif de calcul. Une telle information numérique peut être, de manière non limitative, un fichier, une image, un dossier, un segment d'information issu d'un capteur ou d'un processus informatique, un binaire ou un exécutable.

On appelle « dispositif local de stockage » toute mémoire informatique, quel que soit son type (mémoire vive, mémoire morte, mémoire volatile, mémoire flash ou mémoire virtuelle) internalisé dans une organisation utilisatrice (NAS, ordinateur, serveur, effectivement possédés par l'entreprise), par opposition à un stockage distant dont l'infrastructure matérielle est détenue par un tiers qui met à disposition de l'organisation utilisatrice du système la jouissance du stockage sous forme de service, accessible depuis un réseau local (traduit de « Local Area Network », abrévié « LAN ») ou un réseau étendu (traduit de « Wide Area Network »).

On appelle « dispositif distant de stockage » ou « dispositif tiers de stockage » toute mémoire informatique, quel que soit son type (mémoire vive, mémoire morte, mémoire volatile, mémoire flash ou mémoire virtuelle) non accessible depuis un réseau local et nécessitant la mise en œuvre d'un réseau de données de type réseau étendu (traduit de « Wide Area Network », abrévié « WAN »).

Comme on le comprend à la lecture de la présente description, l'objectif de la présente invention est de valoriser les espaces de stockage mémoire pas ou sous-exploités de parcs informatiques ou de ressources informatiques sur le nuage appartenant à un utilisateur du système ou à un tiers désireux de valoriser ses espaces de stockages disponibles.

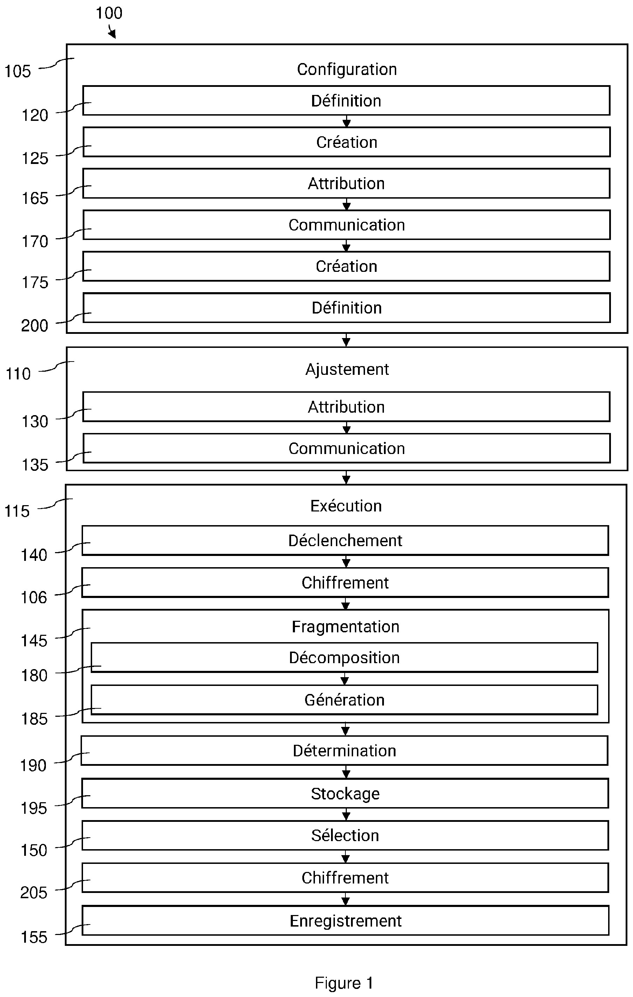

On observe, sur la figure 1, qui n'est pas à l'échelle, une vue schématique d'un mode de réalisation du procédé 100 objet de la présente invention. Ce procédé 100 hybride de stockage d'information numérique, comporte :
- une étape 105 de configuration, qui comporte :
   - une étape 120 de définition d'au moins deux dispositifs de stockage d'informations, au moins l'un des dispositifs étant local et non dédié au stockage,
   - une étape 125 de création d'une abstraction informatique présentant des caractéristiques d'adressage communes entre au moins deux dispositifs de stockage, chaque abstraction étant adressable par un dispositif de contrôle central,
   - de manière itérative, une étape 110 dynamique d'ajustement de capacité de stockage locale, comportant :
      - une étape 130 d'attribution, par au moins un dispositif local et non dédié au stockage, d'une capacité de stockage et
      - une étape 135 de communication, au dispositif de contrôle central, d'une capacité de stockage attribuée et
      - une étape 115 d'exécution, qui comporte :
         - une étape 140 de déclenchement de sauvegarde d'une information numérique,
         - une étape 145 de fragmentation de l'information numérique en au moins un segment d'information,
         - une étape 150 de sélection, par le dispositif de contrôle central et pour chaque segment, d'un dispositif de stockage en fonction des abstractions créées et
         - une étape 155 d'enregistrement, sur le dispositif de stockage sélectionné, du segment d'information associé.

L'étape 105 de configuration correspond à l'ensemble des étapes nécessaires à l'exécution effective du mécanisme global de sauvegarde distribuée d'informations numériques. Cette étape 105 de configuration peut être réalisée lors de l'initialisation du procédé 100 et peut être complétée par des étapes 105 secondaires de configuration au cours du cycle de vie du procédé. Ainsi, il est possible de rajouter des dispositifs locaux et/ou distants de stockage à un parc existant sans nécessiter de mise à l'arrêt du procédé 100.

L'étape 105 de configuration peut être réalisée par le dispositif de contrôle central.

Ce dispositif de contrôle central joue le rôle d'orchestrateur de l'architecture 300 et du procédé 100, la fonction de ce dispositif constituant à, d'une part, constater la présence de dispositifs de stockages définis comme disponibles et, d'autre part, sélectionner parmi cet ensemble le ou les stockages sur le ou lesquels un segment d'information doit être enregistré. Le dispositif de contrôle central présente donc des caractéristiques de registre central de ressources accessibles à l'architecture 300 réalisant le procédé 100 et d'actionneur de ce registre. Une troisième responsabilité du dispositif de contrôle est de stocker la cartographie des données stockées de manière à pouvoir reconstituer les données lors de la restauration. Dit autrement, au moment de la restauration d'une sauvegarde, il faut connaître tous les segments, leur ordonnancement, les paramètres des opérations de pré-conditionnement réalisées (pour pouvoir les inverser, par exemple décompression), mais également pour chaque segment, les blocs qui le composent, leur ordonnancement relatif, les paramètres de redondance et le dispositif qui stocke chacun de ces blocs.

Comme on le comprend, le dispositif central de contrôle est préférentiellement adressable directement par au moins un stockage local et au moins un stockage distant, permettant la constitution d'une topologie de communication en étoile entre un réseau local et un réseau distant non local.

L'étape 105 de configuration peut, alternativement, être réalisée par tout dispositif électronique de calcul susceptible d'exécuter un programme informatique de configuration d'une architecture distribuée de stockage de documents. L'étape 105 de configuration peut également être réalisée de manière distribuée, c'est-à-dire sans autorité centrale, sur la base par exemple de contrats intelligents d'une technologie à registre distribué de type chaine de blocs par exemple.

L'étape 120 de définition d'au moins deux dispositifs de stockage d'informations est réalisée, par exemple, par la mise en œuvre d'un dispositif de calcul configuré pour exécuter un programme informatique dédié. Au cours de cette étape 120 de définition, chaque dispositif de stockage est identifié par un programme informatique et associé à une adresse, dans un registre d'adresses de dispositifs de stockage disponibles. Cette identification et cette association à une adresse peuvent être réalisées de manière automatique ou manuelle. Par « manuelle », on entend réalisée par un utilisateur qui, par l'utilisation d'un moyen d'entrée, de type interface utilisateur par exemple, sélectionne au moins un dispositif de stockage pour être utilisé par le procédé 100. La réalisation automatique de l'étape 120 de définition peut correspondre, par exemple, à l'examen systématique des ressources mémoires associées à un dispositif de calcul réalisant l'étape 120 de définition, à la cartographie des ressources disponibles et au stockage de leurs adresses informatiques.

L'étape 125 de création est réalisée, par exemple, par la mise en œuvre d'un dispositif de calcul configuré pour exécuter un programme informatique dédié. Au cours de cette étape 125 de création, le dispositif de calcul est configuré pour créer, pour chaque dispositif de stockage, un schéma de données unique (ou au moins partagé par au moins deux dispositifs de stockage) transparent du point de vue d'un sélecteur de dispositif de stockage recherchant une adresse de stockage pour un segment d'information. Dit autrement, une ressource locale et une ressource distante sont représentées par des schémas de données identiques ne permettant pas à un logiciel demandant l'enregistrement d'une information numérique de savoir si le dispositif de stockage sur lequel est stocké l'information numérique est de type local ou distant.

L'étape 110 dynamique d'ajustement de capacité de stockage locale a pour fonction de moduler la capacité générale de l'architecture en fonction des ressources disponibles au niveau des dispositifs de stockage locaux. En effet, ces dispositifs, non dédiés, sont utilisés pour d'autres fonctions que le stockage mis en œuvre dans le cadre du procédé 100 et leurs capacités effectives fluctuent ainsi dans le temps. L'étape 110 dynamique d'ajustement peut être perçue comme une extension de l'étape 105 de configuration. L'étape 110 dynamique d'ajustement comporte l'ensemble des étapes permettant de constater la variation de ressources disponibles et d'enregistrer, au niveau du dispositif central de contrôle, ces variations.

L'étape 110 d'ajustement peut, alternativement, être réalisée par tout dispositif électronique de calcul susceptible d'exécuter un programme informatique de configuration d'une architecture distribuée de stockage de documents. L'étape 110 d'ajustement peut également être réalisée de manière distribuée, c'est-à-dire sans autorité centrale, sur la base par exemple de contrats intelligents d'une technologie à registre distribué de type chaine de blocs par exemple.

L'étape 130 d'attribution est réalisée, par exemple, par la mise en œuvre d'un dispositif de calcul configuré pour exécuter un programme informatique dédié. Au cours de cette étape 130 d'attribution, une capacité de stockage correspondant à une quantité de mémoire disponible pour ce dispositif local est attribuée à l'architecture en charge de réaliser le procédé 100. Cette quantité de mémoire peut être déterminée en fonction d'un ratio fixé par un utilisateur ou requis par le dispositif central de contrôle, par exemple 15% de la capacité totale de mémoire. Dans des variantes, la quantité de mémoire peut être déterminée en fonction de la proportion de mémoire non utilisée déterminée localement ou en fonction d'un registre d'utilisation de ladite mémoire. Ces variantes, dynamiques, permettent une adaptation de la capacité de mémoire attribuée à l'architecture basée sur une constatation effective de l'utilisation mémoire du dispositif local de stockage.

Dans des variantes, l'étape 130 d'attribution peut être associée à des règles de disponibilité des capacités attribuées. Par exemple, une telle règle peut correspondre à la disponibilité d'une capacité de mémoire attribuée en fonction d'une heure et/ou d'une durée de stockage. Une telle durée correspond, par exemple, aux heures de nuit pour un dispositif de stockage correspondant à un ordinateur de bureau.

Comme on le comprend, l'étape 130 d'attribution peut être configurée pour associer au moins une caractéristique de disponibilité à une capacité de stockage, l'étape 150 de sélection étant réalisée en fonction d'au moins une capacité de stockage communiquée au dispositif central de contrôle.

Comme on le comprend, l'étape 130 d'attribution peut être configurée pour associer au moins un identifiant d'utilisateur à une capacité de stockage, l'étape 150 de sélection étant réalisée en fonction d'au moins un identifiant d'utilisateur communiqué au dispositif central de contrôle. Un autre paramètre pouvant être pris en compte lors de l'étape 130 d'attribution est un paramètre représentatif d'un « groupe de disponibilité » (traduit par « Availability Zone »), qui est différent de la disponibilité d'une machine en fonction de son état allumé ou éteint). Cette notion vise à regrouper ensemble les appareils soumis aux mêmes risques (par exemple, tous les ordinateurs d'un même bureau peuvent être détruits par un incendie unique, mais deux ordinateurs présents dans deux maisons éloignées ne peuvent pas l'être). Grouper ensemble les ressources qui peuvent être détruites d'un seul coup permet de distribuer la redondance de l'information directement entre les groupes et pas entre les ressources, pour maximiser l'utilité de la redondance (éviter de tout perdre d'un coup).

L'étape 135 de communication est réalisée, par exemple, par la mise en œuvre d'un dispositif de calcul configuré pour exécuter un programme informatique dédié. Au cours de cette étape 135 de communication, tout protocole de communication sur un réseau de données peut être mis en œuvre. Par exemple, le protocole TCP/IP (pour « transmission control protocol / internet protocol », traduit par « protocole de contrôle de transmission / protocole d'internet ») peut être mis en œuvre.

L'étape 135 de communication permet au dispositif central de contrôle de tenir à jour un registre de capacités de stockages disponibles pour l'exécution du procédé 100.

Par comparaison avec l'utilisation exclusive de dispositifs de stockage dédiés, comme des serveurs et des NAS (pour « Network Attached Storage », traduit par serveur de stockage en réseau), la mise en œuvre de dispositifs locaux de stockage génère deux problématiques principales qui peuvent être adressées par la conception de l'architecture :
- la fiabilité et la disponibilité de dispositifs de stockage non dédié sont sensiblement inférieures à celle de dispositifs de stockage dédiés ; le taux de pannes est plus élevé, il peut être éteint à tout moment par son utilisateur, ou encore être temporairement indisponible du fait d'une mauvaise connexion au réseau - l'architecture peut alors mettre en place des stratégies alternatives en cas d'indisponibilité telles, par exemple :
   - lors du stockage d'un bloc, si le dispositif de stockage sélectionné n'est pas disponible, le système peut sélectionner un autre dispositif de stockage présentant les mêmes caractéristiques : c'est-à-dire qu'il est garanti qu'une stratégie d'allocation du système est respectée en tout état de cause - par exemple dans le cas d'une allocation par zone, le dispositif de stockage indisponible est remplacé par un autre dispositif de stockage disponible de la même zone, ou une cible appartenant à une zone pas encore utilisée (le contrat étant qu'il ne doit pas exister deux blocs du même segment sur la même zone) et
   - lors de la lecture d'un bloc, si le dispositif de stockage qui le contient n'est pas disponible, on utilise la redondance de l'architecture pour récupérer les données depuis un autre dispositif de stockage (soit une copie du bloc en mode miroir, soit un bloc de parité) - si l'architecture détecte un comportement suspicieux de la part du dispositif de stockage en défaut (par exemple le renvoi d'un bloc corrompu lors de la demande de lecture, ce qui peut être un vecteur d'attaque), des mesures correctives peuvent être prises- ces mesures incluent la mise sur liste noire du dispositif de stockage (le dispositif de stockage ne reçoit plus de nouveaux blocs) et la reconstitution de la redondance perdue par déplacement du bloc reconstitué sur un autre dispositif de stockage sain et
   - l'utilisation d'un dispositif de stockage non dédié ne doit pas impacter sa fonction principale (qui n'est donc pas le stockage), ce qui peut être réalisé par exemple de la manière suivante :
      - concernant le stockage, l'architecture surveille en permanence l'espace disponible sur chaque dispositif de stockage, si l'espace disponible passe en dessous d'un seuil d'alerte (configurable) - par exemple à la suite du téléchargement d'un fichier volumineux par l'utilisateur du dispositif de stockage - l'architecture refuse le stockage de nouveaux blocs, même si la capacité attribuée à l'architecture sur ce dispositif de stockage n'est pas atteinte - cette sécurité met la priorité sur la fonctionnalité principale du dispositif de stockage, et sacrifie la fonction stockage avant qu'elle ne rentre en conflit avec la fonction principale et
      - concernant l'usage des ressources réseau, mémoire et processeur, celle-ci peut être réduite au minimum, par exemple au travers de l'optimisation logicielle de l'architecture - quand le dispositif de stockage local doit utiliser des ressources, il le fait sur des durées courtes (inférieures à la seconde, si possible inférieures aux 100ms) de manière à ce que cela reste indétectable pour l'utilisateur humain du dispositif de stockage.

Dans des modes de réalisation optionnels, tel que le mode de réalisation représenté en figure 1, l'étape 105 de configuration et/ou l'étape dynamique d'ajustement comporte :
- une étape 165 d'attribution, par au moins un dispositif tiers de stockage situé dans un réseau informatique tiers par rapport à au moins un dispositif local, d'une capacité de stockage,
- une étape 170 de communication, par au moins un dispositif tiers au dispositif de contrôle central, d'une capacité de stockage attribuée et
- une étape 175 de création, par un système de calcul, d'une abstraction informatique présentant des caractéristiques d'adressage communes entre au moins un dispositif local et au moins un dispositif tiers, chaque abstraction étant adressable par un dispositif de contrôle central.

L'étape 165 d'attribution est réalisée, par exemple, de manière similaire à l'étape 130 d'attribution. L'étape 165 d'attribution est dédiée aux dispositifs tiers de stockage accessibles, par exemple, via une **API** et mis à disposition par un utilisateur non-propriétaire (ou non membre d'une organisation propriétaire) des stockages locaux et/ou distants mis en œuvre par les étapes 120 de définition et 130 d'attribution.

L'étape 170 de communication est réalisée, par exemple, de manière similaire à l'étape 135 de communication.

L'étape 175 de création est réalisée, par exemple, de manière similaire à l'étape 125 de création. Au terme de cette étape 175 de création, un dispositif de stockage local, distant et tiers sont adressable de manière interchangeable et transparente.

L'étape 115 d'exécution a pour fonction de procéder au stockage et/ou à la lecture de fichiers stockés dans un dispositif de stockage faisant partie de l'architecture en charge de réaliser le procédé 100. L'étape 115 d'exécution peut être réalisée de manière parallèle ou successive aux étapes 105 de configuration et 110 d'ajustement. L'étape 115 d'exécution peut être déclenchée par tout dispositif requérant l'enregistrement d'une information numérique, requérant la lecture d'une telle information numérique ou requérant la suppression d'une telle information numérique.

L'étape 115 d'exécution peut, alternativement, être réalisée par tout dispositif électronique de calcul susceptible d'exécuter un programme informatique de configuration d'une architecture distribuée de stockage de documents. L'étape 115 d'exécution peut également être réalisée de manière distribuée, c'est-à-dire sans autorité centrale, sur la base par exemple de contrats intelligents d'une technologie à registre distribué de type chaine de blocs par exemple.

L'étape 140 de déclenchement est réalisée, par exemple, par la mise en œuvre d'un dispositif de calcul configuré pour exécuter un programme informatique dédié. Au cours de cette étape 140 de déclenchement, un programme informatique tiers envoie par exemple au dispositif central de contrôle une instruction de sauvegarde d'une information numérique. Cette instruction peut résulter d'une commande manuelle ou automatique de sauvegarde de l'information numérique.

Certains modes de réalisation particuliers visent à rendre l'étape de déclenchement plus intelligente en utilisant la remontée d'utilisation du système.

Par exemple, un déclencheur dynamique, basé sur des préférences de l'utilisateur ("réalise au moins une sauvegarde par jour au moment que tu juges le plus opportun"), est réalisé. Le système dispose alors d'une zone de liberté dans le déclenchement de la sauvegarde pour l'optimiser selon différents paramètres :
- nombre d'ordinateur connectés - le système peut, par exemple, déclencher la sauvegarde entre 12h et 14h car d'après un historique de connexion des utilisateurs, c'est le meilleur moment en termes de disponibilité de la puissance de calcul,
- utilisation des ressources des ordinateurs - pour ne pas impacter le travail des utilisateurs, la sauvegarde est réalisée durant une pause de 10h ou après 18h, le système utilisant les remontées de données pour choisir le moment opportun,
- modification des données - la modification d'une donnée en cours de sauvegarde peut créer des difficultés techniques et, donc, les sauvegardes sont déclenchées en dehors des heures d'utilisation habituelles des données où
- bilan carbone de l'électricité - l'activation du système est réalisée durant des périodes où l'énergie est décarbonée (heures creuses, pic de production solaire, etc.) pour limiter l'impact de la sauvegarde - le bilan carbone de l'électricité pouvant être obtenu par la connexion à un service tiers.

Ainsi, comme on le comprend, dans des modes de réalisations particuliers, l'étape d'exécution est réalisée en fonction de règles d'exécution, au moins une règle d'exécution étant associée à :
- une valeur représentative d'un nombre de dispositifs de stockage définis,
- une valeur représentative d'une utilisation des dispositifs de stockage définis,
- une valeur représentative d'un horaire d'exécution et/ou
- une valeur représentative d'une émission carbone liée à la production d'électricité mise en œuvre pour alimenter un dispositif de stockage.

Le procédé 100 comporte une étape (non représentée) de préconditionnement de l'information numérique pouvant comporter une étape de compression, d'indexation ou d'analyse statistique par exemple. L'information numérique préconditionnée est alors transmise à l'étape 145 de fragmentation.

Dans des modes de réalisations particuliers, un dispositif de stockage d'un dispositif réalisant l'étape 140 de déclenchement est exclu d'une liste de dispositif de stockage candidats à l'étape 150 de sélection.

Dit autrement, un dispositif émetteur déclenchant une sauvegarde ne fait pas partie des cibles de stockage potentielles, dans de telles variantes.

L'étape 145 de fragmentation est réalisée, par exemple, par la mise en œuvre d'un dispositif de calcul configuré pour exécuter un programme informatique dédié. Au cours de cette étape 145 de fragmentation, l'information numérique est divisée en au moins un segment d'information numérique. Le segment d'information numérique correspond ainsi à une subdivision de l'information numérique à sauvegarder. Cette étape 145 de fragmentation peut être réalisée au niveau du dispositif central de contrôle ou au niveau d'un dispositif de calcul requérant la sauvegarde de l'information numérique.

L'information numérique peut correspondre à des données représentatives d'une information et peut être accompagnée d'une information numérique complémentaire comportant des métadonnées. Cette information numérique complémentaire peut être fragmentée également.

La taille d'un fragment peut être fixe ou variable et fixée au cours de l'étape 105 de configuration.

Cette approche alliant plusieurs niveaux de décomposition apporte de nets avantages par rapport au stockage direct d'informations numériques :
- cette approche permet de stockage d'informations numériques de grande taille sur une collection de dispositifs dont la capacité individuelle est inférieure à la taille de l'information numérique grâce à la répartition des segments ou blocs et
- cette approche permet de déléguer certains traitements de pré-conditionnement au dispositif de calcul d'informations numériques client réalisant le stockage ; par exemple, le chiffrement est réalisé entièrement à la source, et seules des données chiffrées transitent et sont stockées dans les autres dispositifs de stockage du système. Si l'un de ces composants venait à être compromis par un attaquant, le chiffrement protégerait la confidentialité des données.

Dans des modes de réalisations optionnels, tel que celui représenté en figure 1, l'étape 145 de fragmentation comporte :
- une étape 180 de décomposition du segment d'information en au moins un bloc d'information et
- une étape 185 de génération de redondances, pour au moins un bloc d'information,
les blocs d'informations étant enregistrés au cours de l'étape 155 d'enregistrement.

L'étape 180 de décomposition est réalisée, par exemple, par la mise en œuvre d'un dispositif de calcul configuré pour exécuter un programme informatique dédié. Au cours de cette étape 180 de décomposition, le segment d'information est divisé en au moins un bloc d'information, chaque bloc d'information étant ensuite enregistré sur un dispositif de stockage.

L'étape 185 de génération de redondances est réalisée, par exemple, par la mise en œuvre d'un dispositif de calcul configuré pour exécuter un programme informatique dédié. Au cours de cette étape 185 de génération de redondances, un mécanisme de duplication (mode miroir) ou de parité tel un code d'effacement (« erasure coding », en anglais) peut-être mis en œuvre.

Dans des modes de réalisations optionnels, tel que celui représenté en figure 1, l'étape 115 d'exécution comporte une étape 160 de chiffrement à la source d'un segment d'information ou de l'information numérique originale en fonction d'une privée tierce.

L'étape 160 de chiffrement est réalisée, par exemple, par la mise en œuvre d'un dispositif de calcul configuré pour exécuter un programme informatique dédié. Au cours de cette étape 160 de chiffrement à la source, l'information numérique initiale est chiffrée au niveau du dispositif requérant la sauvegarde de l'information numérique en amont de son transfert sur le ou les dispositifs de stockage sélectionnés. L'information numérique initiale chiffrée est ici, par exemple, chaque bloc indépendamment ou chaque segment indépendamment avant la décomposition du segment en blocs.

L'étape 150 de sélection est réalisée, par exemple, par la mise en œuvre d'un dispositif de calcul configuré pour exécuter un programme informatique dédié. Au cours de cette étape 150 de sélection, au moins un dispositif de stockage est sélectionné parmi les dispositifs de stockages adressables. Cette sélection peut être réalisée selon une stratégie d'enregistrement définie en amont, en fonction d'un profil d'utilisateur ou d'une typologie de segment d'information par exemple.

Dans des modes de réalisations dynamiques et intelligents, la stratégie générale est définie en amont du stockage, mais elle est spécialisée en fonction de l'état du système en temps réel. Cette stratégie prend, par exemple, en compte un certain nombre de propriétés dynamiques ou statiques connues des dispositifs de stockage ou de leur environnement, tels :
- la charge de travail actuelle d'un ordinateur,
- le temps de traitement moyen d'une demande (qui peut varier fortement en fonction de la demande ; par exemple un enregistrement rapide et une lecture très lente),
- la fiabilité ou la disponibilité du dispositif (l'ordinateur est-il souvent éteint ou allumé ?) où
- le bilan carbone la production d'électricité à un instant donné.

L'évaluation de la stratégie et de ses paramètres est réalisée pour chaque segment, ce qui implique que deux segments provenant d'une même source peuvent être traités différemment suite à l'évolution de l'état du système.

Le dispositif central peut mettre en place un système expert (de type intelligence artificielle par exemple) visant à déterminer une configuration de stockage optimale en fonction des informations disponibles et de priorités énoncées par l'utilisateur (réduction du risque, réduction de l'impact carbone, restauration rapide des données, par exemple).

Ainsi, comme on le comprend, dans des modes de réalisation particuliers, l'étape de sélection est réalisée en fonction :
- d'une valeur représentative d'une charge de travail en cours ou à venir d'un dispositif de stockage,
- d'une valeur représentative du temps de traitement moyen d'une demande par le dispositif de stockage,
- d'une valeur représentative de la fiabilité ou la disponibilité du dispositif de stockage et/ou
- d'une valeur représentative d'émissions carbone liées à la production d'électricité mise en œuvre pour alimenter un dispositif de stockage.

L'étape 155 d'enregistrement est réalisée, par exemple, par la mise en œuvre d'un dispositif de calcul configuré pour exécuter un programme informatique dédié. Au cours de cette étape 155 d'enregistrement, le dispositif de stockage est configuré pour enregistrer, dans une mémoire informatique, le segment d'information.

La transmission du segment à enregistrer vers le dispositif de stockage dépend du dispositif sélectionné et de la manière dont la communication avec ce dispositif de stockage est réalisée.

Dans des modes de réalisation optionnels, tel que celui représenté en figure 1, au moins deux segments et/ou blocs représentatifs d'une information numérique initiale sont enregistrés sur au moins deux dispositifs de stockages distincts. Le choix des dispositifs sélectionnés peut dépendre d'une stratégie de sélection.

Dans des modes de réalisation optionnels, tel que celui représenté en figure 1, l'étape 105 de configuration comporte une étape 200 de définition d'une stratégie de sélection, l'étape 150 de sélection mettant en œuvre une stratégie de sélection définie.

L'étape 200 de définition d'une stratégie est réalisée, par exemple, par la mise en œuvre d'un dispositif de calcul configuré pour exécuter un programme informatique dédié. Cette étape 200 de sélection peut être réalisée de manière automatique, semi-automatique ou manuelle. Par exemple, une stratégie peut être définie en fonction d'un profil d'utilisateur ou en fonction d'un type d'information numérique. Cette stratégie peut être définie dans une interface utilisateur.

Un premier exemple de stratégie est une stratégie d'allocation par utilisateur : on choisit de répartir les blocs entre utilisateurs différents, de manière à éviter qu'un même utilisateur ait en sa possession plusieurs blocs du même segment. En effet si ce cas se présente, l'utilisateur exerce une influence importante sur le réseau avec un risque de chantage à la disponibilité sur les blocs qu'il contrôle. D'autres paramètres peuvent être pris en compte, comme l'espace disponible de chaque dispositif de stockage, sa fiabilité, la rapidité de sa connexion, etc.

Un deuxième exemple de stratégie est une stratégie d'allocation par zone : on choisit de répartir les blocs entre zones de disponibilités, c'est-à-dire des groupes de cibles présentant des caractéristiques de disponibilité différentes (par exemple, tous les ordinateurs d'un même bureau ou bâtiment forment une zone car ils peuvent être détruits par un même incendie, ou volés ensemble). L'objectif est de maximiser la disponibilité des données en répartissant la redondance des dispositifs de stockage indépendants. D'autres paramètres peuvent être pris en compte, comme l'espace disponible de chaque cible, sa fiabilité, la rapidité de sa connexion, etc.

Dans des modes de réalisation optionnels, tel que celui représenté en figure 1, le procédé 100 comporte, en amont de l'étape 155 d'enregistrement sur au moins un stockage sélectionné, une étape 205 de chiffrement local du segment ou du bloc à enregistrer en fonction d'une clé de chiffrement aléatoire, cette clé de chiffrement aléatoire étant configurée pour être utilisée lors d'une lecture du segment d'information enregistré pour en assurer l'intégrité et pour protéger le dispositif de stockage de l'introduction de code malveillant.

L'étape 205 de chiffrement local est réalisée, par exemple, par la mise en œuvre d'un dispositif de calcul configuré pour exécuter un programme informatique dédié. Au cours de cette étape 205 de chiffrement local, une clé aléatoire de chiffrement est générée soit sur le dispositif de calcul associé au dispositif de stockage chargé de l'enregistrement soit par le dispositif central de contrôle. Cette clé, aléatoire, brouille le code binaire du bloc ou du segment, de manière entraîner la désactivation d'instructions de programmation malveillantes qui y auraient été insérées.

Dans des modes de réalisation optionnels, tel que celui représenté en figure 1, l'étape 115 d'exécution comporte une étape 190 de détermination d'une empreinte unique d'un segment d'information et une étape 195 de stockage de l'empreinte numérique déterminée, cette empreinte étant configurée pour être utilisée lors d'une lecture du segment d'information enregistré pour en assurer l'intégrité.

L'étape 190 de détermination d'une empreinte est réalisée, par exemple, par la mise en œuvre d'un dispositif de calcul configuré pour exécuter un programme informatique dédié. Au cours de cette étape 190 de détermination d'une empreinte, un hachage d'au moins une donnée ou métadonnée du bloc et/ou du segment d'information est obtenu, par exemple.

L'étape 195 de stockage de l'empreinte est réalisée, par exemple, par la mise en œuvre d'un dispositif de calcul configuré pour exécuter un programme informatique dédié. Au cours de cette étape 195 de stockage de l'empreinte, l'empreinte est stockée dans une mémoire informatique associée au dispositif central de contrôle, du dispositif de stockage sur lequel est enregistré le bloc et/ou segment et/ou sur le dispositif ayant requis l'enregistrement du bloc et/ou segment.

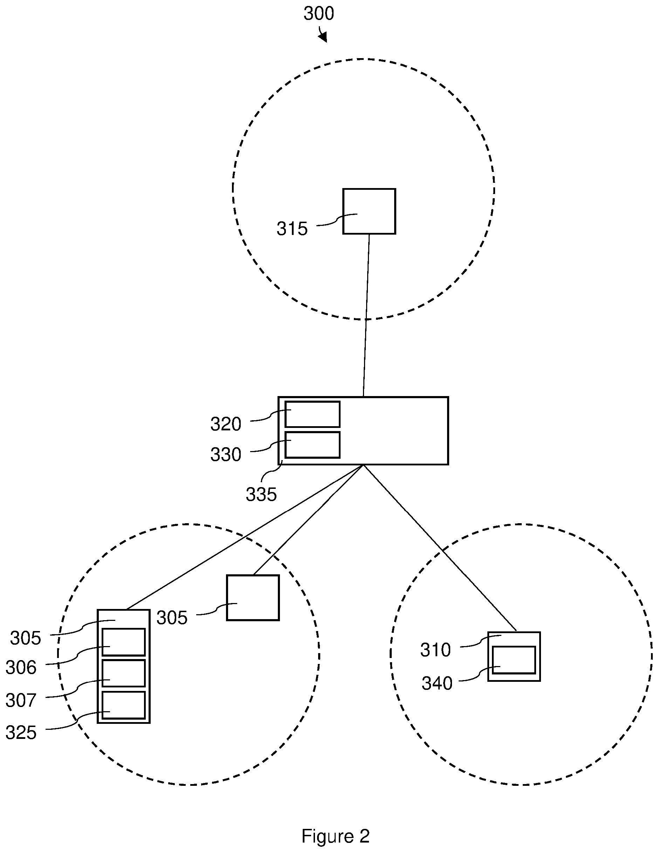

La figure 2 représente, schématiquement, un mode de réalisation particulier de l'architecture 300 objet de la présente invention. Cette architecture 300 hybride de stockage d'information numérique, comporte :
- au moins deux dispositifs, 305, 310 et 315, de stockage d'informations, au moins l'un des dispositifs 305 étant local et non dédié au stockage, au moins un dispositif local comportant :
   - un moyen 306 d'attribution d'une capacité de stockage et
   - un moyen 307 de communication, à un dispositif 335 de contrôle central, d'une capacité de stockage attribuée,
   - un moyen 320 de configuration, configuré pour créer une abstraction informatique présentant des caractéristiques d'adressage communes entre au moins deux dispositifs de stockage, chaque abstraction étant adressable par le dispositif de contrôle central,
   - un moyen 325 de déclenchement de sauvegarde, par n'importe quel périphérique d'un réseau connecté au dispositif 335 de contrôle central, d'une information numérique,
   - un moyen 330 de fragmentation de l'information numérique, par n'importe quel périphérique d'un réseau connecté au dispositif 335 de contrôle central ou par le dispositif 335 de contrôle central, en au moins un segment d'information,
   - le dispositif 335 de contrôle central associé à chaque dispositif de stockage comportant un moyen de sélection, par le dispositif de contrôle central et pour chaque segment, d'un dispositif de stockage en fonction des abstractions créées et
   - un moyen 340 d'enregistrement, sur le dispositif de stockage sélectionné, du segment d'information associé.

Les moyens mis en œuvre, ainsi que leurs variantes, pour réaliser l'architecture 300 sont décrits en regard de la description de la figure 1.

Dans une variante de l'architecture 300, cette architecture comporte un agent informatique installé sur un dispositif de calcul (ordinateur ou serveur informatique par exemple) susceptible d'interagir avec le dispositif central de contrôle, le dispositif central de contrôle et les dispositifs de stockage.

L'agent informatique regroupe, par exemple, deux fonctionnalités principales :
- rendre accessible une mémoire informatique associée au dispositif de calcul au dispositif central de contrôle, correspondant à l'étape 120 de définition ou à l'étape 130 d'attribution, par exemple et
- restaurer ou sauvegarder des données, sur un dispositif de stockage associé au dispositif de calcul.

Le dispositif 335 central de contrôle est, par exemple, configuré pour autoriser ou refuser des transferts de données entre agents informatiques et pour stocker une cartographie du réseau comportant des adresses de ressources de stockages ainsi que des adresses d'informations numériques stockées.

Le dispositif 335 central de contrôle peut également déclencher la sauvegarde ou la restauration d'une information numérique.

Les agents informatiques peuvent communiquer directement entre eux ou utiliser le dispositif 335 central de contrôle en tant que passerelle.

Comme on le comprend à la lecture de la présente description, la présente invention vise également un procédé de restauration ou de reconstitution d'une information numérique stockée de manière distribuée. La nature exacte de ce procédé de restauration comporte les étapes inverses du procédé de stockage mis en œuvre.

Dans une version minimale, un tel procédé de restauration comporte :
- une étape de déclenchement d'une requête de restauration d'une information numérique,
   - une étape de détermination d'au moins une adresse de stockage d'au moins un bloc ou segment de l'information numérique,
- une étape de collecte, pour chaque adresse déterminée, de chaque bloc ou segment,
- optionnellement, une étape d'assemblage d'une pluralité de blocs pour former un segment de l'information numérique et
- optionnellement, une étape d'assemblage d'une pluralité de segments pour former l'information numérique.

D'autres versions, plus avancées, peuvent mettre en œuvre des étapes de réalisation d'un traitement inverse aux préconditionnements réalisés sur l'information numérique, un segment et/ou un bloc.

Par exemple, si le procédé de stockage met en œuvre une étape de chiffrement de l'information numérique, puis une étape de découpage en segments et/ou en blocs, puis une étape de distribution de l'information numérique découpée sur une pluralité de dispositifs et une étape de stockage, distribuée, de l'information numérique, le procédé de restauration comporte une étape de lecture de l'information numérique distribuée, une étape de regroupement des informations numériques distribuées, une étape de reconstitution de l'information numérique et une étape de déchiffrement de l'information numérique reconstituée.

Un tel procédé de restauration est donc implicitement divulgué ici, par réalisation des étapes inverses aux étapes réalisées au cours du procédé de stockage.

## Revendications

1. Procédé (100) hybride de stockage d'information numérique, **caractérisée en ce qu'**il comporte :
- une étape (105) de configuration, qui comporte :
- une étape (120) de définition d'au moins deux dispositifs de stockage d'informations, au moins l'un des dispositifs étant local et non dédié au stockage,
- une étape (125) de création d'une abstraction informatique présentant des caractéristiques d'adressage communes entre au moins deux dispositifs de stockage, chaque abstraction étant adressable par un dispositif de contrôle central,
- de manière itérative, une étape (110) dynamique d'ajustement de capacité de stockage locale, comportant :
- une étape (130) d'attribution, par au moins un dispositif local et non dédié au stockage, d'une capacité de stockage et
- une étape (135) de communication, au dispositif de contrôle central, d'une capacité de stockage attribuée et
- une étape (115) d'exécution, qui comporte :
- une étape (140) de déclenchement de sauvegarde d'une information numérique,
- une étape (145) de fragmentation de l'information numérique en au moins un segment d'information,
- une étape (150) de sélection, par le dispositif de contrôle central et pour chaque segment, d'un dispositif de stockage en fonction des abstractions créées et
- une étape (155) d'enregistrement, sur le dispositif de stockage sélectionné, du segment d'information associé.

2. Procédé (100) selon la revendication 1, dans lequel l'étape (115) d'exécution comporte une étape (160) de chiffrement à la source d'un segment d'information en fonction d'une clé privée tierce.

3. Procédé (100) selon l'une des revendications 1 ou 2, dans lequel l'étape (105) de configuration et/ou l'étape (110) dynamique d'ajustement comporte :
- une étape (165) d'attribution, par au moins un dispositif tiers de stockage situé dans un réseau informatique tiers par rapport à au moins un dispositif local, d'une capacité de stockage,
- une étape (170) de communication, par au moins un dispositif tiers au dispositif de contrôle central, d'une capacité de stockage attribuée et
- une étape (175) de création, par un système de calcul, d'une abstraction informatique présentant des caractéristiques d'adressage communes entre au moins un dispositif local et au moins un dispositif tiers, chaque abstraction étant adressable par un dispositif de contrôle central.

4. Procédé (100) selon la revendication 3, dans lequel le dispositif central de contrôle est adressable directement par au moins un stockage local et au moins un stockage tiers, permettant la constitution d'un réseau en étoile entre un réseau local et un réseau distant non local.

5. Procédé (100) selon l'une des revendications 1 à 4, dans lequel l'étape (145) de fragmentation comporte :
- une étape (180) de décomposition du segment d'information en au moins un bloc d'information et
- une étape (185) de génération de redondances, pour au moins un bloc d'information,
les blocs d'informations étant enregistrés au cours de l'étape (155) d'enregistrement.

6. Procédé (100) selon l'une des revendications 1 à 5, dans lequel au moins deux segment et/ou blocs représentatifs d'une information numérique initiale sont enregistrés sur au moins deux dispositifs de stockages distincts.

7. Procédé (100) selon l'une des revendications 1 à 6, dans lequel l'étape (115) d'exécution comporte une étape (190) de détermination d'une empreinte unique d'un segment d'information et une étape (195) de stockage de l'empreinte numérique déterminée, cette empreinte étant configurée pour être utilisée lors d'une lecture du segment d'information enregistré pour en assurer l'intégrité.

8. Procédé (100) selon l'une des revendications 1 à 7, dans lequel une étape (130, 165) d'attribution est configurée pour associer au moins une caractéristique de disponibilité à une capacité de stockage, l'étape (150) de sélection étant réalisée en fonction d'au moins une capacité de stockage communiquée au dispositif central de contrôle.

9. Procédé (100) selon l'une des revendications 1 à 8, dans lequel une étape (130, 165) d'attribution est configurée pour associer au moins un identifiant d'utilisateur à une capacité de stockage, l'étape (150) de sélection étant réalisée en fonction d'au moins un identifiant d'utilisateur communiqué au dispositif central de contrôle.

10. Procédé (100) selon l'une des revendications 1 à 9, dans lequel l'étape (105) de configuration comporte une étape (200) de définition d'une stratégie de sélection, l'étape (150) de sélection mettant en œuvre une stratégie de sélection définie.

11. Procédé (100) selon l'une des revendications 1 à 10, qui comporte, en amont de l'étape (155) d'enregistrement sur au moins un stockage sélectionné, une étape (205) de chiffrement local du segment ou du bloc à enregistrer en fonction d'une clé de chiffrement aléatoire, cette clé de chiffrement aléatoire étant configurée pour être utilisée lors d'une lecture du segment d'information enregistré pour en assurer l'intégrité et pour protéger le dispositif de stockage de l'introduction de code malveillant.

12. Procédé (100) selon l'une des revendications 1 à 11, dans lequel un dispositif de stockage d'un dispositif réalisant l'étape (140) de déclenchement est exclu d'une liste de dispositif de stockage candidats à l'étape (150) de sélection.

13. Procédé (100) selon l'une des revendications 1 à 12, dans lequel l'étape (150) de sélection est réalisée en fonction :
- d'une valeur représentative d'une charge de travail en cours ou à venir d'un dispositif de stockage,
- d'une valeur représentative du temps de traitement moyen d'une demande par le dispositif de stockage,
- d'une valeur représentative de la fiabilité ou la disponibilité du dispositif de stockage et/ou
- d'une valeur représentative d'émissions carbone liées à la production d'électricité mise en œuvre pour alimenter un dispositif de stockage.

14. Procédé (100) selon l'une des revendications 1 à 13, dans lequel l'étape (115) d'exécution est réalisée en fonction de règles d'exécution, au moins une règle d'exécution étant associée à :
- une valeur représentative d'un nombre de dispositifs de stockage définis,
- une valeur représentative d'une utilisation des dispositifs de stockage définis,
- une valeur représentative d'un horaire d'exécution et/ou
- une valeur représentative d'une émission carbone liée à la production d'électricité mise en œuvre pour alimenter un dispositif de stockage.

15. Architecture (300) hybride de stockage d'information numérique, **caractérisée en ce qu'**elle comporte :
- au moins deux dispositifs (305, 310, 315) de stockage d'informations, au moins l'un des dispositifs (305) étant local et non dédié au stockage, au moins un dispositif local comportant :
- un moyen (306) d'attribution d'une capacité de stockage et
- un moyen (307) de communication, à un dispositif (335) de contrôle central, d'une capacité de stockage attribuée,
- un moyen (320) de configuration, configuré pour créer une abstraction informatique présentant des caractéristiques d'adressage communes entre au moins deux dispositifs de stockage, chaque abstraction étant adressable par le dispositif de contrôle central,
- un moyen (325) de déclenchement de sauvegarde d'une information numérique,
- un moyen (330) de fragmentation de l'information numérique en au moins un segment d'information,
- le dispositif (335) de contrôle central associé à chaque dispositif de stockage comportant un moyen de sélection, par le dispositif de contrôle central et pour chaque segment, d'un dispositif de stockage en fonction des abstractions créées et
- un moyen (340) d'enregistrement, sur le dispositif de stockage sélectionné, du segment d'information associé.

## Patentansprüche

1. Hybrides Verfahren (100) zur Speicherung digitaler Informationen, **dadurch gekennzeichnet, dass** es Folgendes umfasst:
- einen Schritt (105) zur Konfiguration, der Folgendes umfasst:
- einen Schritt (120) zur Definition von mindestens zwei Informationsspeichervorrichtungen, wobei mindestens eine der Vorrichtungen lokal und nicht für die Speicherung vorgesehen ist,
- einen Schritt (125) zur Erstellung einer computergestützten Abstraktion mit gemeinsamen Adressierungseigenschaften zwischen mindestens zwei Speichervorrichtungen, wobei jede Abstraktion durch eine zentrale Steuervorrichtung adressierbar ist,
- einen iterativen Schritt (110) zur dynamischen Anpassung der lokalen Speicherkapazität, der Folgendes umfasst:
- einen Schritt (130) zur Zuweisung einer Speicherkapazität durch mindestens eine lokale, nicht für die Speicherung vorgesehene Vorrichtung und
- einen Schritt (135) zur Kommunikation einer zugewiesenen Speicherkapazität an die zentrale Steuervorrichtung und
- einen Schritt (115) zur Ausführung, der Folgendes umfasst:
- einen Schritt (140) zur Auslösung der Sicherung digitaler Informationen,
- einen Schritt (145) zur Fragmentierung der digitalen Informationen in mindestens ein Informationssegment,
- einen Schritt (150) zur Auswahl einer Speichervorrichtung durch die zentrale Steuervorrichtung für jedes Segment in Abhängigkeit von den erstellten Abstraktionen und
- einen Schritt (155) zur Speicherung des zugehörigen Informationssegments auf der ausgewählten Speichervorrichtung.

2. Verfahren (100) nach Anspruch 1, wobei der Schritt (115) zur Ausführung einen Schritt (160) zur Verschlüsselung eines Informationssegments an der Quelle unter Verwendung eines dritten privaten Schlüssels umfasst.

3. Verfahren (100) nach einem der Ansprüche 1 oder 2, wobei der Schritt (105) zur Konfiguration und/oder der Schritt (110) zur dynamischen Anpassung Folgendes umfasst:
- einen Schritt (165) zur Zuweisung einer Speicherkapazität durch mindestens eine Dritt-Speichervorrichtung, die sich in einem Dritt-Computernetzwerk in Bezug auf mindestens eine lokale Vorrichtung befindet,
- einen Schritt (170) zur Kommunikation einer zugewiesenen Speicherkapazität durch mindestens eine Drittvorrichtung an die zentrale Steuervorrichtung und
- einen Schritt (175) zur Erstellung einer Rechnerabstraktion durch ein Rechensystem, die gemeinsame Adressierungseigenschaften zwischen mindestens einer lokalen Vorrichtung und mindestens einer Drittvorrichtung aufweist, wobei jede Abstraktion durch eine zentrale Steuervorrichtung adressierbar ist.

4. Verfahren (100) nach Anspruch 3, wobei die zentrale Steuervorrichtung direkt von mindestens einem lokalen Speicher und mindestens einem Drittspeicher adressierbar ist, wodurch die Bildung eines Sternnetzwerks zwischen einem lokalen Netzwerk und einem nicht lokalen Fernnetzwerk ermöglicht wird.

5. Verfahren (100) nach einem der Ansprüche 1 bis 4, wobei der Schritt (145) zur Fragmentierung Folgendes umfasst:
- einen Schritt (180) zur Zerlegung des Informationssegments in mindestens einen Informationsblock und
- einen Schritt (185) zur Erzeugung von Redundanzen für mindestens einen Informationsblock,
wobei die Informationsblöcke während des Schritts (155) zur Speicherung gespeichert werden.

6. Verfahren (100) nach einem der Ansprüche 1 bis 5, wobei mindestens zwei Segmente und/oder Blöcke, die für eine ursprüngliche digitale Information repräsentativ sind, auf mindestens zwei getrennten Speichervorrichtungen gespeichert werden.

7. Verfahren (100) nach einem der Ansprüche 1 bis 6, wobei der Schritt (115) zur Ausführung einen Schritt (190) zur Bestimmung eines eindeutigen Abdrucks eines Informationssegments und einen Schritt (195) zur Speicherung des bestimmten digitalen Abdrucks umfasst, wobei dieser Abdruck so konfiguriert ist, dass er beim Lesen des aufgezeichneten Informationssegments verwendet wird, um dessen Integrität sicherzustellen.

8. Verfahren (100) nach einem der Ansprüche 1 bis 7, wobei ein Schritt (130, 165) zur Zuweisung so konfiguriert ist, dass er mindestens eine Verfügbarkeitseigenschaft einer Speicherkapazität zuordnet, wobei der Schritt (150) zur Auswahl in Abhängigkeit von mindestens einer Speicherkapazität durchgeführt wird, die der zentralen Steuervorrichtung mitgeteilt wird.

9. Verfahren (100) nach einem der Ansprüche 1 bis 8, wobei ein Schritt (130, 165) zur Zuweisung so konfiguriert ist, dass er mindestens eine Benutzerkennung einer Speicherkapazität zuordnet, wobei der Schritt (150) zur Auswahl in Abhängigkeit von mindestens einer Benutzerkennung durchgeführt wird, die der zentralen Steuervorrichtung mitgeteilt wird.

10. Verfahren (100) nach einem der Ansprüche 1 bis 9, wobei der Schritt (105) zur Konfiguration einen Schritt (200) zur Definition einer Auswahlstrategie umfasst, wobei der Schritt (150) zur Auswahl eine definierte Auswahlstrategie implementiert.

11. Verfahren (100) nach einem der Ansprüche 1 bis 10, das vor dem Schritt (155) zur Speicherung auf mindestens einem ausgewählten Speicher, einen Schritt (205) zur lokalen Verschlüsselung des zu speichernden Segments oder Blocks anhand eines zufälligen Verschlüsselungscodes, wobei dieser zufällige Verschlüsselungscode so konfiguriert ist, dass er beim Lesen des gespeicherten Informationssegments verwendet wird, um dessen Integrität zu gewährleisten und die Speichervorrichtung vor der Eingabe eines bösartigen Codes zu schützen.

12. Verfahren (100) nach einem der Ansprüche 1 bis 11, wobei eine Speichervorrichtung einer Vorrichtung, die den Schritt (140) zur Auslösung ausführt, aus einer Liste von Speichervorrichtungen ausgeschlossen wird, die für den Schritt (150) zur Auswahl in Frage kommen.

13. Verfahren (100) nach einem der Ansprüche 1 bis 12, wobei der Schritt (150) zur Auswahl in Abhängigkeit von folgenden Faktoren durchgeführt wird:
- einem Wert, der eine aktuelle oder zukünftige Arbeitslast einer Speichervorrichtung repräsentiert,
- einem Wert, der die durchschnittliche Verarbeitungszeit einer Anforderung durch die Speichervorrichtung repräsentiert,
- einem Wert, der die Zuverlässigkeit oder Verfügbarkeit der Speichervorrichtung repräsentiert, und/oder
- einem Wert, der für die CO2-Emissionen im Zusammenhang mit der Stromerzeugung zur Versorgung einer Speichervorrichtung repräsentativ ist.

14. Verfahren (100) nach einem der Ansprüche 1 bis 13, wobei der Schritt (115) zur Ausführung gemäß Ausführungsregeln durchgeführt wird, wobei mindestens eine Ausführungsregel Folgendem zugeordnet ist:
- einem Wert, der eine Anzahl definierter Speichervorrichtungen repräsentiert,
- einem Wert, der eine Nutzung der definierten Speichervorrichtungen repräsentiert,
- einem Wert, der einen Ausführungszeitplan repräsentiert, und/oder
- einem Wert, der für die CO2-Emission im Zusammenhang mit der Stromerzeugung zur Versorgung einer Speichervorrichtung repräsentativ ist.

15. Hybride Architektur (300) zur Speicherung digitaler Informationen, **dadurch gekennzeichnet, dass** sie Folgendes umfasst:
- mindestens zwei Vorrichtungen (305, 310, 315) zur Speicherung von Informationen, wobei mindestens eine der Vorrichtungen (305) lokal und nicht für die Speicherung vorgesehen ist, wobei mindestens eine lokale Vorrichtung Folgendes umfasst:
- ein Mittel (306) zur Zuweisung einer Speicherkapazität und
- ein Mittel (307) zur Kommunikation einer zugewiesenen Speicherkapazität an eine zentrale Steuervorrichtung (335),
- ein Mittel (320) zur Konfiguration, das so konfiguriert ist, dass es eine Computerabstraktion mit gemeinsamen Adressierungseigenschaften zwischen mindestens zwei Speichervorrichtungen erstellt, wobei jede Abstraktion von der zentralen Steuervorrichtung adressierbar ist,
- ein Mittel (325) zur Auslösung der Sicherung digitaler Informationen,
- ein Mittel (330) zur Fragmentierung der digitalen Informationen in mindestens ein Informationssegment,
- die zentrale Steuervorrichtung (335), die jeder Speichervorrichtung zugeordnet ist und ein Mittel umfasst, mit dem die zentrale Steuervorrichtung für jedes Segment eine Speichervorrichtung entsprechend den erstellten Abstraktionen auswählt, und
- ein Mittel (340) zur Speicherung des zugehörigen Informationssegments auf der ausgewählten Speichervorrichtung.

## Claims

1. Hybrid method (100) for storing digital information, **characterised in that** it comprises:
- a configuration step (105), which comprises:
- a step (120) of defining at least two information storage devices, at least one of the devices being local and not dedicated to storage;
- a step (125) of creating a computer abstraction having addressing characteristics shared between at least two storage devices, each abstraction being addressable by a central control device;
- iteratively, a dynamic step (110) of adjusting the local storage capacity, comprising:
- a step (130) of allocating a storage capacity by at least one device that is local and not dedicated to storage; and
- a step (135) of communicating an allocated storage capacity to the central control device; and
- an execution step (115), which comprises:
- a step (140) of activating the backup of an item of digital information;
- a step (145) of fragmenting the digital information into at least one information segment;
- a step (150) of the selection, by the central control device and for each segment, of a storage device according to the abstractions created; and
- a step (155) of recording the associated information segment on the selected storage device.

2. Method (100) according to claim 1, wherein the execution step (115) comprises a step (160) of encryption at the source of an information segment based on a third-party private key.

3. Method (100) according to one of claims 1 or 2, wherein the configuration step (105) and/or the dynamic adjustment step (110) comprises:
- a step (165) of the allocation of a storage capacity by at least one third-party storage device located in a third-party **IT** network in relation to at least one local device;
- a step (170) of communicating an allocated storage capacity by at least one third-party device to the central control device; and
- a step (175) of creating, by a calculation system, a computer abstraction having addressing characteristics shared between at least one local device and at least one third-party device, each abstraction being addressable by a central control device.

4. Method (100) according to claim 3, wherein the central control device is directly addressable by at least one local storage unit and at least one third-party storage unit, making it possible to constitute a star network between a local network and a remote non-local network.

5. Method (100) according to one of claims 1 to 4, wherein the fragmentation step (145) comprises:
- a step (180) of decomposing the information segment into at least one information block; and
- a step (185) of generating redundancies, for at least one information block,
the information blocks being recorded during the recording step (155).

6. Method (100) according to one of claims 1 to 5, wherein at least two segments and/or blocks representative of an initial item of digital information are recorded on at least two different storage devices.

7. Method (100) according to one of claims 1 to 6, wherein the execution step (115) comprises a step (190) of determining a unique fingerprint of an information segment, and a step (195) of storing the digital fingerprint determined, this fingerprint being configured to be used during a reading of the recorded information segment to ensure its integrity.

8. Method (100) according to one of claims 1 to 7, wherein an allocation step (130, 165) is configured to link at least one characteristic of availability to a storage capacity, the selection step (150) being performed based on at least one storage capacity communicated to the central control device.

9. Method (100) according to one of claims 1 to 8, wherein an allocation step (130, 165) is configured to link at least one user identifier to a storage capacity, the selection step (150) being performed based on at least one user identifier communicated to the central control device.

10. Method (100) according to one of claims 1 to 9, wherein the configuration step (105) comprises a step (200) of defining a strategy of selection, the selection step (150) utilising a defined selection strategy.

11. Method (100) according to one of claims 1 to 10, which comprises, before the step (155) of recording in at least one selected storage, a step (205) of the local encryption of the segment or block to be recorded based on a random encryption key, this random encryption key being configured to be used during a reading of the recorded information segment to ensure its integrity and protect the storage device from the introduction of malicious code.

12. Method (100) according to one of claims 1 to 11, wherein a storage device of a device carrying out the activation step (140) is excluded from a list of candidate storage devices in the selection step (150).

13. Method (100) according to one of claims 1 to 12, wherein the selection step (150) is performed based on:
- a value representative of a current or future workload of a storage device;
- a value representative of the time for processing a request by the storage device;
- a value representative of the reliability or availability of the storage device;
and/or
- a value representative of carbon emissions linked to the production of electricity utilised to power a storage device.

14. Method (100) according to one of claims 1 to 13, wherein the execution step (115) is performed based on execution rules, at least one execution rule being associated to:
- a value representative of a number of defined storage devices;
- a value representative of a use of defined storage devices;
- a value representative of an execution timetable; and/or
- a value representative of a carbon emission linked to the production of electricity utilised to power a storage device.

15. Hybrid architecture (300) for storing digital information, **characterised in that** it comprises:
- at least two information storage devices (305, 310, 315), at least one of the devices (305) being local and not dedicated to storage, at least one local device comprising:
- a means (306) for allocating a storage capacity; and
- a means (307) for communicating an allocated storage capacity to a central control device (335);
- a configuration means (320), configured to create a computer abstraction having addressing characteristics shared between at least two storage devices, each abstraction being addressable by a central control device;
- a means (325) for activating the backup of an item of digital information;
- a means (330) for fragmenting the digital information into at least one information segment;
- the central control device (335) associated to each storage device comprising a means for the selection, by the central control device and for each segment, of a storage device according to the abstractions created; and
- a means (340) for recording the associated information segment on the selected storage device.
